Europäisches Patentamt

European Patent Office

Office européen des brevets

(11) Veröffentlichungsnummer: **0 053 656**
**B1**

(12) # EUROPÄISCHE PATENTSCHRIFT

(45) Veröffentlichungstag der Patentschrift:
**01.08.84**

(51) Int. Cl.³: **A 47 J 37/04**

(21) Anmeldenummer: **81106984.8**

(22) Anmeldetag: **05.09.81**

(54) **Durchlaufgrill, insbesondere für Steaks.**

(30) Priorität: **05.12.80 DE 3045835**
**11.02.81 DE 3104805**
**07.07.81 DE 3126687**

(43) Veröffentlichungstag der Anmeldung:
**16.06.82 Patentblatt 82/24**

(45) Bekanntmachung des Hinweises auf die Patenterteilung:
**01.08.84 Patentblatt 84/31**

(84) Benannte Vertragsstaaten:
**AT BE CH DE FR GB IT LI NL SE**

(56) Entgegenhaltungen:
**DE - U - 7 524 910**
**FR - A - 1 427 895**
**US - A - 2 243 492**
**US - A - 3 189 729**
**US - A - 3 291 036**
**US - A - 3 543 694**
**US - A - 3 991 665**

(73) Patentinhaber: **Gutekunst, Peter, Hauptstrasse 39,**
**D-6967 Buchen-Bödigheim (DE)**

(72) Erfinder: **Gutekunst, Peter, Hauptstrasse 39,**
**D-6967 Buchen-Bödigheim (DE)**

(74) Vertreter: **Hach, Hans Karl, Dr., Tarunstrasse 23,**
**D-6950 Mosbach-Waldstadt (DE)**

**Beschreibung**

Die Erfindung betrifft einen Durchlaufgrill, insbesondere für Steaks, mit zwei achsparallel horizontal mit Zwischenraum nebeneinander angeordneten, beheizbaren Walzen, die gegenläufig zueinander und mit ihren den Zwischenraum jeweils begrenzenden Umfangsabschnitten nach unten umlaufend antreibbar sind und deren Zwischenraum zur Bahn eines durchlaufenden Steaks gehört.

Bei einem aus der US-A-2 243 492 bekannten Grill sind unterhalb von zwei unbeheizten Mürbewalzen zwei beheizte Walzen vorgesehen. Die angestrebte grillende Einwirkung der heissen Walzenmäntel ist auf die tatsächliche Berührungszeit des zwischen den beiden beheizten Walzen durchlaufenden Steaks beschränkt.

Aufgabe der Erfindung ist es, bei einem Durchlaufgrill der eingangs genannten Art, die Einwirkungszeit bei gleichbleibender Durchlaufgeschwindigkeit auf möglichst einfache Weise zu vergrössern.

Das Kennzeichen des Anspruchs 1 beschreibt die Lösung dieser Aufgabe. Durch den zweiten Zwischenraum, der von dem Steak passiert werden muss, wird die Einwirkungszeit bei gleichbleibender Durchlaufgeschwindigkeit etwa verdoppelt und dazu wird nur eine einzige zusätzliche Walze benötigt.

Um das Bedienungspersonal vor Verletzungen durch Verbrennung möglichst zu schützen und auch um unnötige Verlustwärmestrahlung zu vermeiden, empfiehlt es sich, eine sich an die Mäntel der Walzen mit Abstand anschmiegende Abschirmung vorzusehen, in der eine Einschuböffnung und eine Austrittsöffnung in der Bahn eines den Zwischenraum zwischen den Walzen durchlaufenden Steaks ausgespart ist.

Die Walzen können elektrisch oder mit Gas beheizt werden, wobei die Heizenergie am besten im Inneren der dann hohl auszuführenden Walzen zugeführt wird.

Man kann einen Grill nach der Erfindung mit Achsen sehr kurz ausführen, so dass im Zwischenraum nebeneinander nur ein oder zwei Fleischstücke hineinpassen, man kann die Achsen aber auch sehr viel länger ausführen, um sehr viele Fleichstücke nebeneinander gleichzeitig durchlaufen zu lassen.

Man kann Durchlaufgrills nach der Erfindung, weil sie sehr einfach zu bedienen sind, auch in Automaten einsetzen, in denen nach Einwurf einer Münze oder einer anderen Betätigung aus einem Vorrat selbsttätig ein Fleischstück durch den Grill geführt wird, um dann der Bedienungsperson gebraten ausgeworfen zu werden, gegebenenfalls zusammen mit einem Brötchen oder dergleichen.

Ein Grill nach der Erfindung ist auch anwendbar zum beidseitigen Braten von anderen Lebensmitteln, zum Beispiel sogenannten Hamburgern oder Frikadellen, anderen Fleischstücken und dergleichen, die Anwendung bei Steaks ist aber am vorteilhaftesten und deshalb bevorzugt.

Die Erfindung wird nun anhand der beigefügten Zeichnung näher erläutert.

In der Zeichnung zeigt:

Fig. 1 von oben gesehen einen Grill mit zwei Walzen, teilweise abgebrochen,

Fig. 2 die Schnittansicht gemäss dem Pfeil II aus Fig. 1, jedoch ohne das Gestell und den Antrieb,

Fig. 3 stilisiert einen Grill mit drei Walzen, von der Seite, nämlich in Achsrichtung der Walzen, gesehen,

Fig. 4 einen Grill mit drei Walzen von oben gesehen bei abgenommenem Deckel und teilweise abgebrochen,

Fig. 5 die Walzenanordnung des Grills aus Fig. 4 geschnitten gemäss dem Schnittpfeil VI aus Fig. 4, und

Fig. 6 den Teilschnitt VII aus Fig. 4.

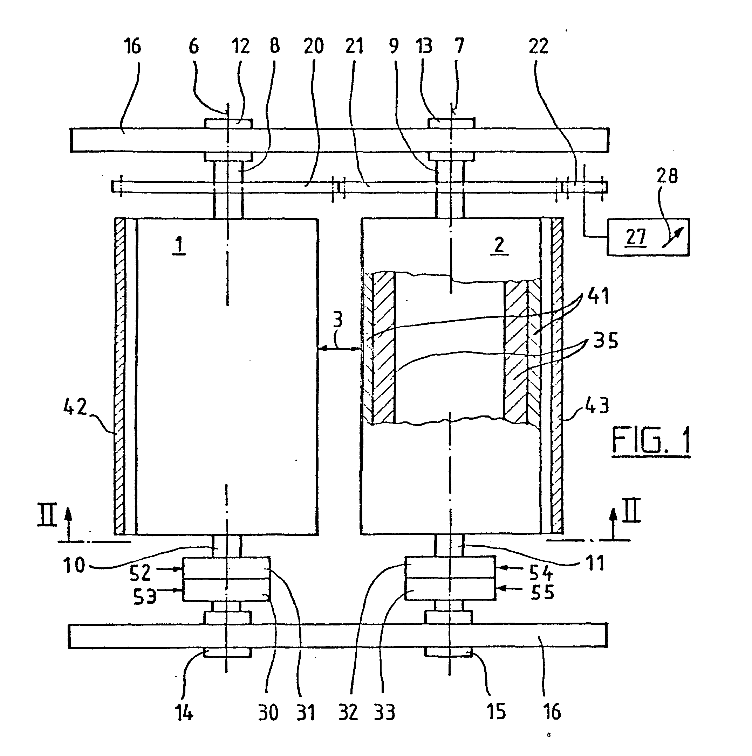

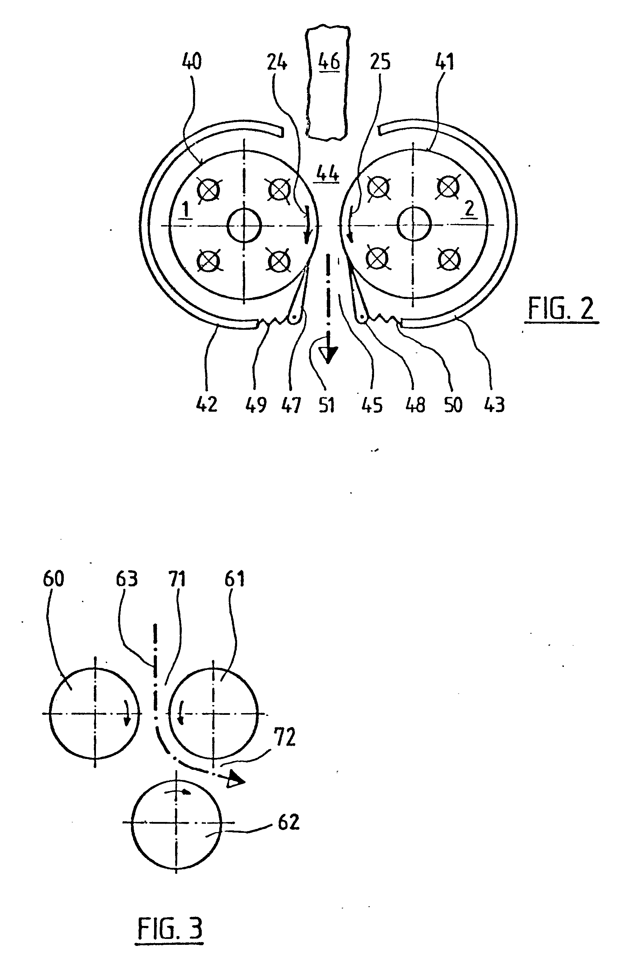

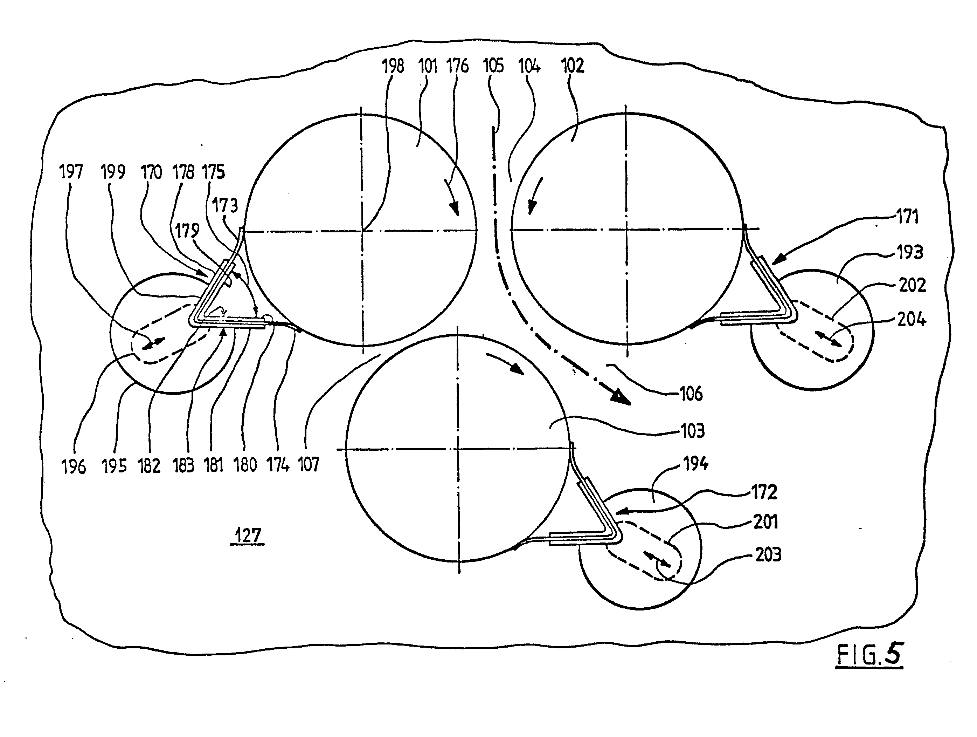

Gemäss Fig. 1 sind mit 1 und 2 zwei beheizbare, hohl ausgebildete Walzen bezeichnet, deren Mäntel 40, 41 aus Eisen oder einem anderen, für Bratkontakt geeigneten Material bestehen, zum Beispiel aus Metall oder Kunststoff. Die Walzen haben überall gleichen kreisrunden Aussenquerschnitt. Die Walzenachsen 6, 7 erstrecken sich parallel horizontal nebeneinander, so dass zwischen den Walzen ein Abstand gemäss Doppelpfeil 3 bestehenbleibt, der etwa 1 cm (Zentimeter) gross ist, entsprechend der Durchschnittsstärke der zu grillenden Steaks. Fleischstücke bis zu einer Stärke von 5 cm können ohne Schwierigkeiten in den Zwischenraum eingezogen werden, weil das Fleisch sich hinreichend zusammendrücken lässt. Die Walzen 1 und 2 sind auf Wellenstummeln 8 bis 11 in Drehlagern 12 bis 15 am nur angedeutet dargestellten Grillgestell 16 drehbar gelagert. Auf die Wellenstummel 8, 9 sind gleichgrosse, miteinander kämmende Zahnräder 20, 21 gesteckt, die über ein Zahnrad 22 angetrieben werden, so dass sie gegenläufig umlaufen, entsprechend den Pfeilen 24, 25 aus Fig. 2.

Das Zahnrad 22 ist Abtriebsrad eines Getriebemotors 27, dessen Abtriebsdrehzahl von Hand an dem Einsteller 28 verstellbar ist. Auf die Wellenstummel 10, 11 sind jeweils zwei gegeneinander und gegenüber der Welle isolierte Schleifringe 30, 31, 32, 33 gesteckt, auf denen über durch die Pfeile angedeutete Kohlebürsten 52 - 55 elektrischer Strom zugeleitet wird für innerhalb der Walzen 1, 2 angeordnete elektrische Heizungen. In der Zeichnung ist teilweise nur die Heizung 35 der Walze 2 sichtbar, die aus einer sich über den ganzen Umfang der Walze innen an den Walzenmantel anliegenden elektrischen Heizmanschette besteht. Die Heizung für die andere Walze 1 ist genauso ausgebildet. Statt der elektrischen Heizung kann auch eine Gasheizung oder eine anders betriebene Heizung vorgesehen sein.

An die Walzenmäntel 40, 41 schmiegen sich mit Abstand Abschirmungen 42, 43 an, zwischen denen oberhalb des Zwischenraums gemäss Doppelpfeil 3 eine schlitzartige Einschuböffnung 44 und unterhalb des Zwischenraums eine schlitzartige Austrittsöffnung 45 freigelassen ist. Durch die Einschuböffnung 44 wird von oben ein Fleischstück 46 eingeführt, bis es von den heissen Walzenmänteln 40, 41 haftend erfasst wird und dann durch den Zwischenraum gezogen wird. Dabei wird es leicht zusammengedrückt und gebraten und verlässt dann fertig gebraten gemäss Pfeil 51 herunterfallend den Zwischenraum. Überschüssiges Fleisch, Schmutz, verbrannte Rückstände und dergleichen werden durch zwei sich über die ganze Länge des Walzenmantels erstreckende Abstreifer 47, 48 abgestreift. Die Abstreifer sind federbelastet durch Zugfedern 49, 50 mit ihren scharfen, der Umlaufrichtung entgegengerichteten Abstreifkanten an den Walzenmänteln angelehnt und am anderen Ende, wie nicht weiter dargestellt, am Gehäuse des Grills schwenkbar gelagert.

Die Umlaufgeschwindigkeit ist vorzugsweise so eingerichtet, dass ein handgrosses Fleischstück etwa in 20 bis 180 Sekunden durch den Zwischenraum hindurchläuft. Die Walzen sind auf eine Oberflächentemperatur von 180°C bis 290°C, vorzugsweise 250°C (Grad Celsius) beheizt. Öl und Fett ist für den Bratvorgang, auch wenn die Walzenmäntel aus Eisen bestehen, wie die Erfahrung gezeigt hat, entbehrlich, man kann aber kleine Mengen Fett oder Öl zugeben, am einfachsten, indem man ein zuzubereitendes Fleischstück damit benetzt.

Für das Braten von anderen Lebensmitteln, zum Beispiel Hamburgern, sind andere Umlaufgeschwindigkeiten und andere Temperaturen optimal, die man gegebenenfalls durch Probieren findet. Bei niedrigen Temperaturen kann man auch mit Fett braten, indem man die Walzenmäntel damit einschmiert oder laufend beträufelt.

In Fig. 3 sind insgesamt drei Walzen 60, 61, 62 dargestellt, die paarweise zwei in Richtung der Durchlaufbahn gemäss Pfeil 63 hintereinander gelegene Zwischenräume bilden, und zwar das Walzenpaar 60, 61 den Zwischenraum 71 und das Walzenpaar 61, 62 den Zwischenraum 72. Die Walze 61 ist dabei an beiden Zwischenräumen 71, 72 beteiligt und demzufolge ist die Bahn gemäss Pfeil 63 um den Umfang dieser Walze 61 gekrümmt. Die Walzen 60, 61, 62 werden in Pfeilrichtung umlaufend mit gleicher Umfangsgeschwindigkeit angetrieben.

Das Ausführungsbeispiel nach Fig. 3 ist, soweit im Text zu Fig. 3 im einzelnen nichts angegeben, genauso ausgebildet und genauso betrieben wie der Grill nach Fig. 1 und 2.

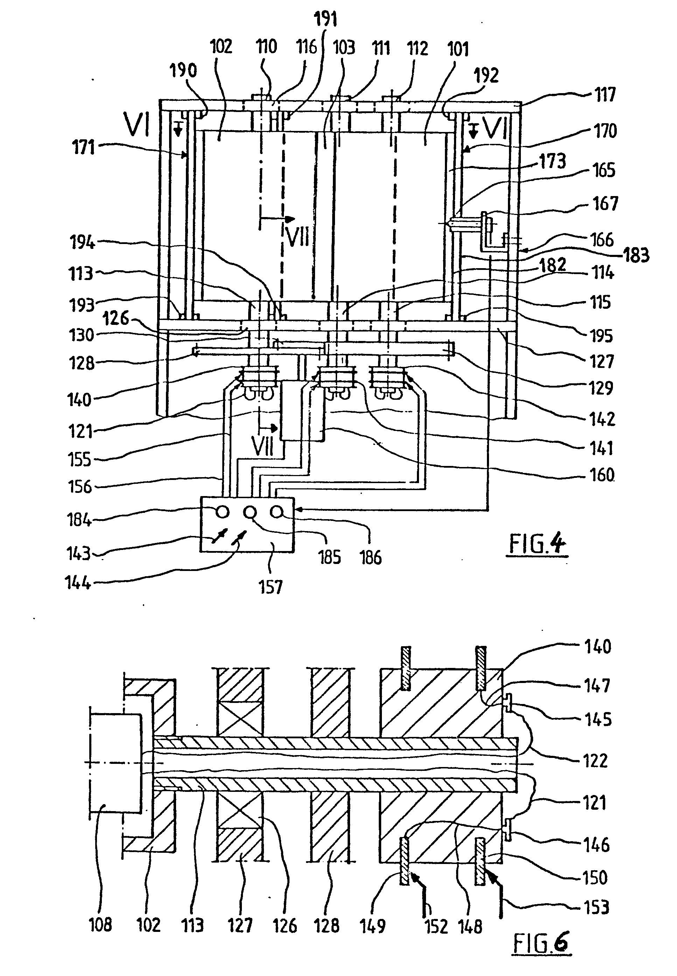

Bei dem in den Fig. 4 bis 6 dargestellten Ausführungsbeispiel sind insgesamt drei beheizte Walzen 101, 102, 103 vorgesehen, die achsparallel, mit horizontaler Achse angeordnet sind. Die Walzen 101 und 102 sind auf gleicher Höhe angeordnet mit einem Zwischenraum 104 dazwischen, der in die durch den Pfeil 105 angezeigte Bahn eines zu grillenden Fleischstückes einbezogen ist. Die Walze 103 ist darunter angeordnet, und zwar mit einem Zwischenraum 106 zur Walze 102, der so gross ist wie der Zwischenraum 104, und mit einem Zwischenraum 107 zur Walze 101, der wesentlich kleiner als der Zwischenraum 104, zum Beispiel halb so gross ist. Der Zwischenraum 107 dient nur als Toleranzabstand und ist nicht breit genug, dass dort ein Fleischstück hindurchlaufen kann. Die Walzen sind in Pfeilrichtung mit gleicher Drehzahl umlaufend angetrieben, so dass sie, bezogen auf die Zwischenräume 104 und 106 in Pfeilrichtung 105 fördern. Die Walzen 101, 102, 103 haben alle gleichen Durchmesser und sind mit einer elektrischen Innenbeheizung, zum Beispiel der in Fig. 6 angedeuteten Innenbeheizung 108, ausgestattet.

In den Walzen 101 bis 103 sind beidseitig Wellenstummel 110 bis 115 eingeschraubt. Mit den Wellenstummeln 110 bis 112 sind die Walzen mit Kugellagern, zum Beispiel dem Kugellager 116, in einer Lagerwand 117 des Gehäuses 166 drehbar gelagert. Die Wellenstummel 113 bis 115 sind rohrförmig ausgebildet. Durch die Wellenstummel sind, wie zum Beispiel für den Wellenstummel 113 aus Fig. 6 ersichtlich, die elektrischen Zuleitungen 121 und 122 der elektrischen Innenbeheizung herausgeführt. Diese Wellenstummel 113 bis 115 sind in Kugellagern, zum Beispiel dem Kugellager 126, in der Lagerwand 127 gelagert. Auf die Wellenstummel sind Zahnräder 128 bis 130 gesteckt, die gleichen Durchmesser und gleiche Zahnteilung haben. Die Zahnräder 128 und 130 kämmen mit dem Zahnrad 129 und das Zahnrad 130 wird durch das nicht dargestellte Ritzel eines elektrischen Getriebemotors 160 angetrieben.

Auf die freien Enden der Wellenstummel 113 bis 115, die über die zugehörigen Kugellager hinausragen, sind Buchsen 140, 141, 142 aus thermisch und elektrisch isolierendem Material verdrehungssicher gesteckt. Die Buchsen sind alle gleich ausgebildet und dienen dem entsprechenden Zweck, wie dies anhand der Buchse 140 aus Fig. 6 nun erläutert wird.

Die Buchse 140 weist auf ihrer Stirnseite zwei elektrische Schraubklemmen 145, 146 auf, an denen die zugehörigen Enden der Zuleitungenn 121, 122 angeschlossen sind. Die Schraubklemmen 145, 146 sind mit innerhalb der Buchse 140 verlegten Leitungen 147, 148 an Schleifringe 149, 150 angeschlossen, die in den Umfang der Buchse 140 eingelassen sind und an denen stationäre elektrische Schleifkontakte 152, 153 schleifen, die über stationär im Gehäuse 166 verlegte Leitungen, zum Beispiel die Leitungen 155, 156, an ein zentrales Steuergerät 157 führen. Dieses Steuergerät steuert die Beheizung der Walzen und den elektrischen Antriebsmotor 160 und weist einen Thermostaten auf, der angesteuert wird durch einen Thermofühler 165, der am Gehäuse 166 in einem Haltebügel 167 befestigt ist und gleitenden Berührungskontakt im mittleren Bereich des Umfangs der Walze 101 findet. Das Steuergerät 157 ist innerhalb des Gehäuses 166 angeordnet und weist eine von aussen zugängliche Handhabe 143 zum Einstellen der Brattemperatur, einen Einschalter 144 und drei Anzeigelampen 184, 185, 186 zur Anzeige der elektrischen Leistungsaufnahme der einzelnen Walzen 101, 102, 103 auf.

Für die Walzen ist in den von Zwischenräumen freien Umfängsbereichen je ein Abstreifer 170, 171, 172 vorgesehen. Die Abstreifer sind unter sich gleich ausgebildet, wie dies nun anhand des Abstreifers 170 erläutert wird.

Der Abstreifer 170 weist zwei Federstahlleisten 173, 174 auf, die im spitzen Winkel 175 zueinander gegen den Walzenumfang der Walze 101 stehen, und zwar die Federstahlleiste 174 gegen die Umlaufrichtung gemäss Pfeil 176 und die Federstahlleiste 173 in Umlaufrichtung.

Die Federstahlleisten sind mit ihren rückwärtigen Enden zwischen je zwei Schenkel 178, 179 beziehungsweise 180, 181 von zwei ineinandergesteckten U-Profilschienen 182, 183 verklemmt. Die Federstahlleisten erstrecken sich, wie aus Fig. 4 ersichtlich, über die ganze Länge der zugehörigen Walze. Die U-Profilschienen ragen über diese Länge hinaus und reichen von der Lagerwand 117 bis zur Lagerwand 127 und sind an diesen überstehenden Enden miteinander verbunden und an der betreffenden Lagerwand abgestützt. Zum Abstützen dient für jedes Ende eine Scheibe 190 bis 195. Diese Scheiben sind unter sich gleich ausgebildet, wie die Scheibe 190 und auch genauso verschraubt.

Die Scheibe 190 ist in einem Langloch 196 an der Lagerwand 117 verschraubt und ist dadurch in Pfeilrichtung 197 auf das Zentrum 198 der zugehörigen Walze 101 justierbar. Die Scheibe 190 weist eine zum Zentrum 198 offene Kerbe 198 auf, in die der rückwärtige Teil des freien Endes der äusseren U-Profilschiene 183 passt und Sitz findet. Man kann unter Überwindung der Federkraft der Federstahlleisten, zum Beispiel der Federstahlleiste 173, 173, die Abstreifer, zum Beispiel den Abstreifer 170, aus dem Lager der Kerbe 199 herausdrücken und den Abstreifer zur Seite schieben und seitlich herausnehmen. Entsprechend kann man auch einen neuen Abstreifer wieder einsetzen.

Die Langlöcher der Scheiben 191, 192 sind mit 201 und 202 bezeichnet und die dem Pfeil 197 entsprechenden Pfeile mit 203 und 204.

## Patentansprüche

1. Durchlaufgrill, insbesondere für Steaks, mit zwei achsparallel horizontal mit Zwischenraum nebeneinander angeordneten, beheizbaren Walzen (60, 61; 101, 102), die gegenläufig zueinander und mit ihren den Zwischenraum (71; 104) jeweils begrenzenden Umfangsabschnitten nach unten umlaufend antreibbar sind und deren Zwischenraum zur Bahn (63; 105) eines durchlaufenden Steaks gehört, dadurch gekennzeichnet, dass eine dritte beheizbare Walze (62; 103) unterhalb und achsparallel zu den beiden oberen Walzen (60, 61, 101, 102) angeordnet sind, dass die untere Walze (62, 103) mit einem Zwischenraum (72; 106) zu einer der oberen Walzen (61, 102) angeordnet ist, der etwa so gross ist wie der Zwischenraum (71, 104) zwischen den oberen Walzen, dass dieser Zwischenraum in Verlängerung nach unten die Bahn eines durchlaufenden Steaks fortsetzt, und dass die untere Walze im gleichen Drehsinn wie die andere der oberen Walzen (60, 101) antreibbar ist.

2. Grill nach Anspruch 1, dadurch gekennzeichnet, dass die untere Walze (103) mit einem Zwischenraum (107) gegenüber der anderen oberen Walze (101) angeordnet ist, der wesentlich kleiner ist, vorzugsweise etwa halb so klein, wie die in die Bahn des Steaks einbezogenen Zwischenräume (104, 106).

3. Gill nach einem der vorhergehenden Ansprüche, gekennzeichnet durch am Walzenumfang federbelastet nachgiebig anliegende, gegen die Umlaufrichtung gerichtete Abstreifer (47, 48; 170, 171, 172), die in von Zwischenräumen freien Umfangsbereichen angeordnet sind.

4. Grill nach Anspruch 3, dadurch gekennzeichnet, dass ein Abstreifer (170, 171, 172) zwei Federstahlstreifen (173, 174) aufweist, die im spitzen Winkel zueinander nebeneinander über die Länge der zugehörigen Walze (101, 102, 103) auf diese mit ihren freien Kanten, der eine Federstahlstreifen (174) gegen die Umlaufrichtung und der andere mit der Umlaufrichtung, angesetzt sind und mit ihrem rückwärtigen Teil gehaltert sind, jeweils zwischen zwei Schenkeln (178, 179, 180) zweier ineinandergesteckter Winkelprofile (182, 183).

5. Grill nach Anspruch 4, dadurch gekennzeichnet, dass mindestens die äussere Profilschiene (183) eines Abstreifers (170) den Abstand zwischen zwei für die beidseitigen Walzenlager vorgesehenen Lagerwänden (117, 127) überspannt und dass an diesen Lagerwänden auf das jeweils zugehörige Walzenzentrum nachrichtbare Kerbträger (190, 191, 192, 193, 194, 195) verschraubt sind, die je eine zum zugehörigen Walzenzentrum (198) hin offene Kerbe (199) aufweisen, in der das zugehörige äussere Ende der äusseren Winkelprofilschiene passend abgestützt wird.

6. Grill nach einem der vorhergehenden Ansprüche, dadurch gekennzeichnet, dass die Walzen (101, 102, 103) mit einer elektrischen Innenbeheizung (108) ausgestattet sind, deren Stromzuleitung (121, 122) innerhalb eines rohrförmig ausgebildeten, auf die zugehörige Walze aufgeschraubten Wellenstummels (113, 114, 115) verlegt ist und dass die rohrförmigen Wellenstummel aller Walzen in Lagern (126) gelagert sind, die an einer gemeinsamen Lagerwand (127) befestigt sind und dass die anderen Walzenenden mit Wellenstummeln (110, 111, 112) in Lagern der anderen Lagerwand (117) gelagert sind.

7. Grill nach Anspruch 6, dadurch gekennzeichnet, dass die freien Enden der rohrförmigen, die Stromzuleitungen (121, 122) aufnehmenden Wellenstummel (113, 114, 115) über die zugehörigen Kugellager (126) hinausragen und dass auf diese freien Enden je eine Buchse (140, 141, 142) aus thermisch isolierendem Material mitumlaufend befestigt ist, in deren Umfang jeweils zwei Kontaktringe (149, 150) eingelassen sind, an denen die Stromzuleitungen angeschlossen sind und an denen stationäre Stromkontakte (152, 153) schleifen.

8. Grill nach einem der vorhergehenden Ansprüche, gekennzeichnet durch einen Thermostaten (157) für die Beheizung aller beheizbaren Walzen (101, 102, 103), der von einem Thermofühler (165) angesteuert wird, der mit im mittleren Bereich des Umfangs einer der Walzen (101) schleifenden Berührungskontakt hat.

## Claims

1. Continuous grill, particularly for grilling steaks, with two axially parallel horizontal heated rolls, which rolls are arranged with space side by side and driven in opposite directions to each other and with perimeter regions restricting the space (71; 104) downwards, which distance is part of the path of the steak, characterized in that a third heated roll (62; 103) is arranged below and axially parallel to the two upper rolls (60, 61; 101, 102); that the lower roll (62; 103) is arranged with space (72; 106) to one of the upper rolls (61; 102), which space being as large as the space (71, 104) between the upper rolls, that in prolongation downwards this space continues the path of a steak, and that the lower roll is driven in the same direction of rotation as the other of the upper rolls (60, 101).

2. Grill according claim 1, characterized in that the lower roll (103) is arranged with space (107) opposite to the other upper roll (101), which space is smaller, preferably about half as small than the space (104, 106) which are included in the path of the steak.

3. Grill according one of the previous claims, characterized by skimmers (47, 48; 170, 171, 172) which are arranged within the space-free perimeter region, spring loaded flexibly adjacent to the circumference of the roll and directed against the direction of rotation.

4. Grill according claim 3, characterized in that a skimmer (170, 171, 172) shows two spring steel strips (173, 174) which are applied with their free edges with an acute angle to each other side by side over the length of the belonging roll (102, 103), the one spring steel strip (174) against the direction of rotation and the other in the direction of rotation, and which are fixed by their back part, each between two sides (178, 179, 180, 181) of two angle sections (182, 183), which are fixed into each else.

5. Grill according claim 4, characterized in that at least the outer profile bar (183) of a skimmer (170) spans the distance between two supports (117, 127) for the mutual bearings of the rolls and that carriers for slots are screwed to these supports which are readjustable to the belonging roll center, each of which showing a slot (199) which is open to the belonging roll center (198), in which slot the outer end of the outer profile bar is supported.

6. Grill according one of the previous claims, characterized in that the rolls (101, 102, 103) are equipped with internal electrical heating members (108), the wires (121, 122) of which are installed within a tubular shaft (113, 114, 115) which is screwed to the belonging roll, and that the shafts of all rolls are bearing-mounted within supporting members (126) which are fixed to a joint support (127) and that the other ends of the rolls are bearing-mounted with shafts (110, 111, 112) within supporting members of the other support (117).

7. Grill according claim 6, characterized in that the free ends of the tubular shafts (113, 114, 115) which include the wires (121, 122) project beyond the belonging ball bearings (126) and that on each of these free ends a socket (140, 141, 142) made from thermic isolated material is mounted jointly rotating, within the circumference of which sockets two contact rings (149, 150) are sunk, to which contact rings the wires are connected and on which contact rings stationary contacts (152, 153) rub.

8. Grill according one of the previous claims, characterized by a thermostat (157) for the heating of all heated rolls (101, 102, 103), which is headed for by a thermo-tracer (165) which has rubbing contact with one of the rolls (101) within the middle of the circumference of said roll.

**Revendications**

1. Grill en continu, utilisé en particulier pour griller des steaks, à savoir un grill à deux cylindres (60, 61; 101, 102) chauffables, à axes parallèles, horizontaux, placés l'un à coté de l'autre et séparés par un intervalle (71; 104) lesquels cylindres peuvent être commandés de manière à tourner en sens opposés l'un par rapport à l'autre, leurs sections périphériques qui limitent chaque fois le susdit intervalle tournant vers le bas, lequel intervalle contient le chemin (63, 105) parcouru par le steak qui traverse le grill, caractérisé par le fait qu'il est placé au-dessous des deux cylindres supérieurs (60, 61; 101, 102), un troisième cylindre chauffable (62, 103), dont l'axe est parallèle à celui des deux autres cylindres, que par rapport à un des cylindres supérieurs (61, 102), le cylindre inférieur (62, 203) présente un intervalle (72, 106) à peu près aussi grand que l'intervalle (71, 104) qui sépare les deux cylindres supérieurs, que cet intervalle en se continuant vers le bas allonge le chemin parcouru par le steak qui traverse le grill et que le cylindre inférieur peut être commandé de manière à tourner dans le même sens de rotation que l'autre des cylindres supérieurs (60, 101).

2. Grill conforme à la revendication 1, caractérisé par le fait que le cylindre inférieur (103) est placé en face de l'autre cylindre supérieur (101) et qu'il est séparé de celui-ci par un intervalle (107) notablement plus petit, de préférence de dimension moitié moindre que ceux qui se trouvent sur le chemin parcouru par le steak (104, 106).

3. Grill conforme à une des revendications précédentes, caractérisé par l'utilisation de racloirs (47, 48; 170, 171, 172), commandés par ressorts d'une manière souple, contigus à la périphérie des cylindres et dirigés en sens inverse du sens de rotation de ceux-ci, lesquels racloirs sont placés dans les zones périphériques, libres d'intervalles.

4. Grill, conforme à la revendication 3, caractérisé par le fait qu'un racloir (170, 171, 172) présente deux bandes d'acier à ressorts (173, 174) qui, à angle aigu, l'une par rapport à l'autre, sont appliquées l'une à côté de l'autre sur toute la longueur du cylindre intéressé (101, 102, 103) sur celui-ci par leurs arêtes libres, l'une de ces bandes d'acier à ressorts (174) étant appliquée dans une direction opposée à celle du sens de rotation du cylindre et l'autre de ces bandes dans la direction du sens de rotation dudit cylindre, lesquelles bandes d'acier à ressort sont chaque fois maintenues par leur partie arrière, entre deux ailes (178, 179; 180, 181) de deux cornières, emboîtées l'une dans l'autre (182, 183).

5. Grill, conforme à la revendication 4, caractérisé par le fait qu'au moins le rail profilé extérieur (183) d'un racloir (170) enjambe la distance comprise entre deux parois de support de palier (117, 127) prévues pour les paliers de cylindre, montés des deux côtés du grill et qui, à l'endroit où se trouvent ces parois de support de palier, il a été chaque fois vissé des cylindres entaillés, rajustables (190, 191, 192, 193, 194, 195) qui présentant une entaille (199) [ouverte vers le centre intéressé (198) du cylindre] dans laquelle l'extrémité extérieure intéressée du rail extérieur de la cornière est supportée d'une manière convenable.

6. Grill, conforme à une des revendications précédentes, caractérisé par le fait que les cylindres (101, 101, 103) sont équipés d'un moyen de chauffage intérieur électrique (108), dont la ligne d'amenée du courant (121, 122) est posée à l'intérieur d'un bout d'arbre (113, 114, 115) (en forme de tube), vissé sur le cylindre intéressé et que les bouts d'arbre (en forme de tubes) de tous les cylindres sont montés dans les paliers (126) fixés à une paroi de support de paliers (127) commune et que les autres extrémités de cylindres pourvues de bouts d'arbre (110, 111, 112) sont montés dans les paliers de l'autre paroi de support de paliers (117).

7. Grill, conforme à la revendication 6, caractérisé par le fait que les extrémités libres des bouts d'arbre (112, 114, 115) en forme de tubes et recevant les lignes électriques (121, 122) d'amenée du courant, dépassent les paliers à billes intéressés et que sur ces extrémités libres, il est chaque fois fixée une douille (140, 141, 142) tournant avec les cylindres et faite en un matériau thermiquement isolant, douille à la périphérie de laquelle, il est chaque fois encastré deux bagues de contact (149, 150) auxquelles sont raccordées les lignes d'amenée du courant électrique et à la périphérie desquelles glissent des contacts électriques glissant fixes (152, 153).

8. Grill, conforme à une des revendications précédentes, caractérisé par la présence d'un thermostat (157) de réglage du chauffage de tous les cylindres chauffables (101, 102, 103), à savoir d'un thermostat (157) commandé par une thermosonde (165) et qui a aussi, dans la zone médiane d'un des cylindres (101), un contact glissant.

FIG. 1

40  24  46  25  41

1  44  2

42  49  47  51  45  48  50  43

FIG. 2

60  63  71  61

72

62

FIG. 3

FIG.5

127

FIG.4

FIG.6